# EUROPEAN PATENT APPLICATION

(11) **EP 4 768 240 A1**
(43) Date of publication of application: **01.07.2026**
(21) Application number: 24856492.4
(22) Date of filing: 21.08.2024
(51) Int. Cl.: B32B 27/00, B32B 3/30, B32B 7/023

(54) **DECORATIVE SHEET AND DECORATIVE MEMBER**

(30) Priority: 22.08.2023 JP 2023134807
(71) Applicant: Toppan Holdings Inc., Tokyo 110-0016 (JP)
(72) Inventor: NOGUCHI Shota, Tokyo 110-0016 (JP); TOGASAKI Hiromasa, Tokyo 110-0016 (JP); AKASHI Aya, Tokyo 110-0016 (JP); OGATA Yumeto, Tokyo 110-0016 (JP)
(74) Representative: Hasegawa, Kan
(86) International application number: PCT/JP2024/029705
(87) International publication number: WO 2025/041804

(57) **Abstract**

There are provided a decorative sheet and a decorative member having texture closer to texture of the real things and having an excellent design property. A decorative sheet (1) includes: a picture design layer (5), a transparent thermoplastic resin layer (6), and a surface protective layer (7) sequentially deposited on one surface of a colored thermoplastic resin layer (2); in which regions containing a predetermined material having light absorption properties to infrared rays as compared with the colored thermoplastic resin layer (2) (gloss matte-expressing design parts (3)) are arranged in synchronization with a picture design of the picture design layer (5) on a surface on the side opposite to the picture design layer (5) of the colored thermoplastic resin layer (2), the gloss matte-expressing design parts (3) have infrared transmittance at a wavelength of 2000 nm of 60% or less, and embossed parts (7a) are formed at positions where the embossed parts (7a) overlap with the regions formed of the predetermined material in plan view of the surface protective layer (7).

## Description

### Technical Field

The present invention relates to a decorative sheet and a decorative member.

### Background Art

A decorative sheet has been developed and grown in the process in which house building has grown as an industry. Originally, materials fitted to regional characteristics, such as wood and stone, have been used for houses. However, with the growth of the housing industry, industrialization has advanced, which has led to a shift from natural materials to artificial materials. In recent years, there is a risk that the heavy use of high-class wood and stone leads to deforestation or environmental problems, which is also a factor in increasing a demand for the decorative sheet. For example, decorative materials obtained by pasting the decorative sheet to wood substrates, such as plywood, medium density fiberboard (MDF), and particle board, resin substrates, inorganic noncombustible substrates, metal substrates, and the like have been widely used (see, PTL 1, for example).

As the design of the decorative sheet, the surfaces of wood, stone, and the like have been imitated in many cases.

### Citation List

### Patent Literature

PTL 1: JP 5045180 B

### Summary of Invention

### Technical Problem

As compared with real wood, stone, and the like, the texture of the surface of the decorative sheet is likely to be flat. Actual wood and stone have a difference in irregularities for each place depending on the surface material, the structure, or the like, and thus have a difference in texture. Although portions with different textures have different color tones in many cases, the decorative sheet does not express the difference, and the high-priced real things are significantly excellent in terms of design.

The present invention has been made in view of the above-described respect. It is an object of the present invention to provide a decorative sheet and a decorative member having texture closer to texture of the real things and having an excellent design property.

### Solution to Problem

To solve the above-described problem, one aspect of the present invention is a decorative sheet having a picture design layer, the decorative sheet including: the picture design layer, a transparent resin layer, and a surface protective layer sequentially deposited on one surface of a colored resin layer; in which, on the other surface of the colored resin layer, a region containing a predetermined material having light absorption properties to infrared rays as compared with the colored resin layer is arranged in synchronization with a picture design of the picture design layer, the region containing the predetermined material has infrared transmittance at a wavelength of 2000 nm of 60% or less, and an embossed part is formed at a position where the embossed part overlaps with the region containing the predetermined material in plan view of the surface protective layer.

Another aspect of the present invention provides a decorative member including: a substrate; and the decorative sheet provided on at least one surface side of the substrate, in which the substrate is any of a wood substrate, a resin substrate, a noncombustible substrate, or a metal substrate.

### Advantageous Effects of Invention

The aspects of the present invention can provide a decorative sheet and a decorative member having texture closer to texture of the real things and having an excellent design property.

### Brief Description of Drawings

FIG. 1 is a cross-sectional view schematically illustrating one example of a decorative sheet according to a first embodiment of the present invention;
FIGS. 2A to 2E are step charts schematically illustrating one example of a procedure of producing the decorative sheet according to the first embodiment of the present invention;
FIG. 3 is a cross-sectional view schematically illustrating one example of a decorative member according to a modification of the first embodiment of the present invention;
FIG. 4 is a cross-sectional view schematically illustrating one example of a decorative sheet according to a second embodiment of the present invention;
FIG. 5 is a cross-sectional view schematically illustrating one example of a decorative sheet according to a modification of the second embodiment of the present invention;
FIG. 6 is a cross-sectional view schematically illustrating one example of a decorative sheet according to a third embodiment of the present invention; and
FIG. 7 is a cross-sectional view schematically illustrating one example of a decorative sheet according to a modification of the third embodiment of the present invention.

### Description of Embodiments

Embodiments of the present technology will now be described with reference to the drawings. This embodiment gives a description taking a decorative sheet and a decorative material for floors or fittings as examples, but decorative sheets for other sites may also be acceptable.

Herein, the drawings are schematic, and the relationship between the thickness and the plane dimension, the ratio of the thickness of each layer, and the like are different from the actual relationship, ratio, and the like. The embodiments described below exemplify the configuration for embodying the technical idea of the present invention. The technical idea of the present invention does not specify materials, shapes, structures, and the like of constituent parts to the materials, shapes, structures, and the like described below. The technical idea of the present invention can be variously altered within the technical scope specified by claims.

### [First embodiment]

First, a first embodiment of the present invention will be described.

A decorative sheet according to one embodiment of the present invention is a decorative sheet having a picture design layer, and including: the picture design layer, a transparent resin layer, and a surface protective layer sequentially deposited on one surface of a colored resin layer; in which, on the other surface of the colored resin layer, a region containing a predetermined material having light absorption properties to infrared rays as compared with the colored resin layer is arranged in synchronization with a picture design of the picture design layer, the region containing the predetermined material has infrared transmittance at a wavelength of 2000 nm of 60% or less, and an embossed part is formed at a position where the embossed part overlaps with the region containing the predetermined material in plan view of the surface protective layer.

A decorative member according to one embodiment of the present invention includes: a substrate; and the decorative sheet provided on at least one surface side of the substrate, in which the substrate is any of a wood substrate, a resin substrate, a noncombustible substrate, or a metal substrate.

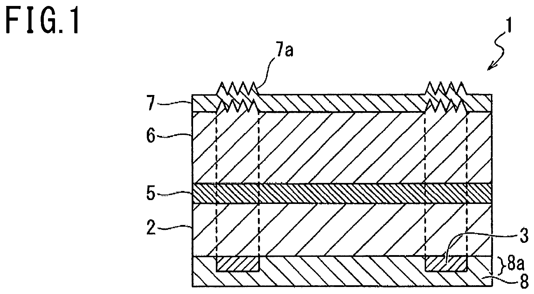

A decorative sheet 1 according to one embodiment of the present invention is formed by depositing a colored thermoplastic resin layer 2, a picture design layer 5, a transparent thermoplastic resin layer (transparent resin layer) 6, and a surface protective layer 7 in this order, in which the surface protective layer 7 has embossed parts (embossed shape) 7a formed therein as illustrated in FIG. 1, for example. Further, on the surface on the side opposite to the picture design layer 5 of the colored thermoplastic resin layer 2, a pattern layer 8a containing gloss matte-expressing design parts 3 and a primer layer 8 are formed. Although the details will be described later, the gloss matte-expressing design parts 3 are regions containing a predetermined material having light absorption properties to light of a predetermined wavelength (e.g., infrared rays).

### [Colored thermoplastic resin layer]

Examples of the colored thermoplastic resin layer 2 as the substrate include polyvinyl chloride, polyethylene terephthalate, polybutylene terephthalate, polyamide, polyethylene, polypropylene, polycarbonate, polyethylene naphthalate, an ethylene-vinyl acetate copolymer, an ethylene-acrylic acid copolymer, an ethylene-acrylic acid ester copolymer, an ionomer, acrylic acid ester, methacrylic acid ester, and the like. Among the above, a polyolefin resin is preferably used in terms of environmental compatibility, processability, and cost. The grade or the composition of the resin can be selected considering the ease of sheeting, printability, and suitability for bending in addition to the above.

As the colored thermoplastic resin layer 2, the hue can be selected as appropriate as the base color of the picture design layer 5. The colored thermoplastic resin layer 2 can be colored by mixing and kneading, for example, a coloring agent, such as a pigment, in sheeting thermoplastic resin, for example. Alternatively, a colored layer can be provided by a method, such as a coating or printing technique, as a solid ink layer before the gloss matte-expressing design parts 3 are provided.

### [Picture design layer]

The picture design layer 5 is a printed layer having a picture design pattern printed thereon to give a design property to the decorative sheet 1. As a method for forming the picture design layer 5, a known printing technique can be adopted. The printing technique is not particularly limited, and is preferably a gravure printing method when the productivity and the picture design quality are considered. For example, when the colored thermoplastic resin layer 2 can be prepared in a rolled state, printing for forming the picture design layer 5 can be performed by the use of a roll-to-roll printing device. In addition to these, examples of the printing technique include an offset printing method, a screen printing method, a flexographic printing method, an electrostatic printing method, an inkjet printing method, a transfer printing method from a transfer sheet, and the like. When such printing techniques are used, the picture design pattern of the picture design layer 5 can be formed not only by a multicolor printing method with common process colors of a yellow color, a red color, a blue color, and a black color but by multicolor printing with special colors performed by preparing plates for colors constituting the picture design pattern, and the like.

As the picture design pattern of the picture design layer 5, an optional picture design pattern may be adopted considering the design property as flooring materials or fittings. For example, a stone grain of marble or the like can be used as the picture design pattern in the image of a floor of a stone material, such as marble. Alternatively, in the case of a wood picture design, for example, various wood grains and cork can also be used as the picture design pattern. In addition to the picture design patterns of natural materials, artificial picture design patterns using these picture design patterns as motifs or artificial picture design patterns, such as geometric patterns, can also be used, for example. In addition to these, examples of the picture design patterns include spring wood regions and autumn wood regions of tree-ring cross sections, wood grain patterns containing vessel parts, leather (embossed leather) patterns, stone grain patterns of the surfaces of stone materials, such as marble, granite, and sandstone, sand grain patterns, tile patterns, brick-layer patterns, fabric patterns, geometric shapes, letters, symbols, abstract patterns, flower patterns, landscapes, characters, and the like.

Printing ink is a mixture of solvents and solids, such as a coloring agent and a binder resin.

Examples of the solvent include petroleum-based organic solvents, such as hexane, heptane, octane, toluene, xylene, ethylbenzene, cyclohexane, and methylcyclohexane; ester-based organic solvents, such as ethyl acetate, butyl acetate, 2-methoxyethyl acetate, and 2-ethoxyethyl acetate; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; and inorganic solvents, such as water. The solvents may be used alone or in combination of two or more types thereof.

Examples of the binder resin include a chlorine-based resin, a urethane resin, an acrylic urethane resin, an acrylic resin, a polyester resin, a polyamide resin, a butyral resin, a polystyrene resin, a nitrocellulose resin (nitrocotton), a cellulose acetate resin, and the like. Examples of the chlorine-based resin include a polyvinyl chloride resin, such as polyvinyl chloride, chlorinated polyethylene, polyvinylidene chloride, an ethylene-vinyl chloride copolymer, a vinyl chloride-vinyl acetate copolymer, and a vinyl chloride-vinyl acetate-(meth)acrylic copolymer; polypropylene chloride; chlorinated polypropylene; and the like. Herein, (meth)acrylic means acrylic or methacrylic. The binder resins may be used alone or in combination of two or more types thereof.

Examples of the coloring agent include inorganic pigments, such as carbon black, iron black, titanium white (titanium oxide), antimony white, chrome yellow, titanium yellow, red iron oxide, cadmium red, ultramarine blue, and cobalt blue; organic pigments, such as quinacridone red, isoindolinone yellow, and phthalocyanine blue; and the like. The coloring agents may be used alone or in combination of two or more types thereof.

Herein, the solvent contained in the printing ink finally evaporates. Therefore, the picture design layer 5 is mainly formed of the solids, such as the coloring agent and the binder resin.

The printing ink may contain other ingredients, such as stabilizers, plasticizers, catalysts, and curing agents. As the printing ink, ink according to the printing method may be adopted. In particular, it is preferable to select the ink considering the adhesiveness or the printability to the colored thermoplastic resin layer 2 and weather resistance as flooring materials or fittings. The thickness of the picture design layer 5 can be adjusted as appropriate considering the decorativeness required in the picture design layer 5, the three-dimensional formability of the decorative sheet 1, and the like. The thickness of the picture design layer 5 is usually 1 µm or more and 1 mm or less, preferably 2 µm or more and 0.1 mm or less, and more preferably 2 µm or more and 50 µm or less.

To improve the adhesiveness between the picture design layer 5 and the transparent thermoplastic resin layer 6, an adhesive layer (not illustrated) may be provided on the surface on the side in contact with the transparent thermoplastic resin layer 6 of the picture design layer 5. By strengthening the adhesion therebetween, the decorative sheet 1 can be given bending processability to follow curved surfaces and right-angled surfaces. Resin used for the adhesive layer (not illustrated) is not particularly limited. For example, a two-component curable urethane resin can be used. Alternatively, an adhesive resin may be bonded to the picture design layer 5 using a urethane adhesive. For applying resin used for the adhesive layer (not illustrated), a coating device or a gravure printing device can be used, for example.

Further, to suitably impart design effects, such as the sense of depth and brightness, of the decorative sheet 1, a bright layer (not illustrated) may be provided between the picture design layer 5 and the transparent thermoplastic resin layer 6. The bright layer (not illustrated) preferably contains a bright pigment and a binder resin. The bright pigment includes pearl pigments, metallic pigments, and the like. In particular, the pearl pigment is preferable because the pearl pigment can suppress a decrease in the light transmittance of the bright layer, and therefore does not impair the visibility of the picture design layer 5.

The pearl pigment is a pigment capable of imparting pearl luster. Examples of the peal pigment include one obtained by coating base particle surfaces with metal oxide. The base particles are preferably scaly particles, such as mica. The metal oxide includes oxides of metals, such as titanium, iron, zirconium, silicon, aluminum, and cerium. One kind of metal oxide may be acceptable or two or more types of metal oxides may be acceptable. Specific examples include oxide-coated mica, such as mica titanium, iron oxide-coated mica, iron oxide-coated mica titanium, Prussian blue-coated mica titanium, Prussian blue-iron oxide-coated mica titanium, chromium oxide-coated mica titanium, carmine-coated mica titanium, organic pigment-coated mica titanium, titanium oxide-coated mica, and titanium oxide-coated synthetic mica; oxide-coated glass powder, such as titanium oxide-coated glass powder and iron oxide-coated glass powder; oxide-coated metal particles, such as titanium oxide-coated aluminum powder; scaly foil flakes, such as basic lead carbonate, lead hydrogen arsenate, and bismuth oxide chloride; fish scale powder; shell fragments; pearl fragments; and the like.

Examples of the metallic pigments include pigments containing metals, such as aluminum, brass, stainless steel, tin, zinc, copper, nickel, gold powder, and silver, alloys of these metals, and the like. The metallic pigments may be used alone or in combination of two or more types thereof.

From the viewpoint of imparting excellent design effects, the average particle size of the bright pigment is preferably 40 µm or less and more preferably 30 µm or less, when the bright layer is formed using gravure printing, for example. From the same viewpoint, the ratio of [Average particle size of bright pigment to Thickness of bright layer] is preferably 0.01 or more and 15 or less and more preferably 0.5 or more and 10 or less. In this specification, the "average particle size" refers to a value that can be determined as the mass average value D50 in particle size distribution measurement by a laser light diffraction method.

The binder resin includes a thermoplastic resin, a cured product of a curable resin composition, and the like, and is preferably a cured product of a curable resin composition from the viewpoint of durability. The cured product of a curable resin composition includes a cured product of a thermosetting resin composition and a cured product of an ionizing radiation curable resin composition. From the viewpoint of interlayer adhesiveness, a cured product of a thermosetting resin composition is preferable.

The thermosetting resin composition used for the bright layer includes a polyester resin composition, an epoxy resin composition, a polyurethane resin composition, an aminoalkyd resin composition, a melamine resin composition, a guanamine resin composition, a urea resin composition, a thermosetting acrylic resin composition, and the like. These thermosetting resin compositions include monomers and/or prepolymers constituting each resin, a curing agent added as required, and the like. As the ionizing radiation curable resin composition used for the bright layer, the same ionizing radiation curable resin composition as that of the surface protective layer 7 described later can be used.

The content of the bright pigment in the bright layer is preferably 10 parts by mass or more and 90 parts by mass or less and more preferably 50 parts by mass or more and 80 parts by mass or less based on 100 parts by mass of the binder resin. By setting the content of the bright pigment to 10 parts by mass or more, a glossy feeling can be sufficiently imparted. By setting the content to 90 parts by mass or less, the impairment of visibility of the picture design layer described later can be suppressed. From the same viewpoint, the thickness of the bright layer is preferably 1 µm or more and 30 µm or less and more preferably 5 µm or more and 20 µm or less.

The bright layer can form an optional pattern according to the design to be imparted. Examples include wood grain patterns, leather patterns, stone grain patterns, sand grain patterns, tile patterns, brick-layer patterns, fabric patterns, geometric shapes, letters, symbols, abstract patterns, flower patterns, landscapes, characters, and the like. The optional pattern preferably has shading to further enhance the design effect. The shading may be formed by the size of halftone dots or the thickness of halftone dots, and is preferably formed by the crude density of halftone dots (i.e., forming the shading by the density of halftone dots while the size of the halftone dots is made uniform).

The bright layer can be formed using a coating liquid containing a bright pigment and a binder resin by a general-purpose printing method, such as gravure printing, for example. When the shading of the bright layer is formed by the crude density of halftone dots, the halftone dots of a printing plate may be formed by a frequency modulation (FM) screen.

### [Transparent thermoplastic resin layer]

The transparent thermoplastic resin layer 6 is a resin layer that gives a thickness feeling and a depth feeing in terms of design and that protects the picture design layer 5 and imparts good surface properties to improve the weather resistance and the abrasion resistance performance of the decorative sheet 1. As a material of the transparent thermoplastic resin layer 6, a vinyl chloride resin, an acrylic resin, and a polyolefin resin (polypropylene resin, polyethylene resin) can be used, for example. In particular, a polyolefin resin is preferable when the environmental compatibility, the processability, and the cost are considered. The grade and the composition of the resin can be selected considering not only the environmental compatibility, the processability, and the cost, but ease of sheeting, printability, and suitability for bending. For the suitability for bending, it is important to select the grade and the composition of the resin considering not to cause whitening or cracking in a bent portion.

As a method for forming the transparent thermoplastic resin layer 6, a lamination technique can be adopted. For example, when the transparent thermoplastic resin layer 6 and the adhesive layer (not illustrated) are formed at the same time, a method for forming the transparent thermoplastic resin layer 6 and the adhesive layer by extruding them by co-extrusion can be adopted.

### [Surface protective layer]

The surface protective layer 7 is a layer for imparting surface properties, such as abrasion resistance, to the decorative sheet 1. The surface protective layer 7 is also a layer for adjusting the surface gloss of the decorative sheet 1. The surface protective layer 7 may be a single layer or a multi-layer. For example, as the surface protective layer 7, two layers of a first surface protective layer (not illustrated 1) and a second surface protective layer (not illustrated) are provided in this order on the transparent thermoplastic resin layer 6. When the surface protective layer 7 containing the first surface protective layer (not illustrated) and the second surface protective layer (not illustrated) is provided, coating and curing of a coating film may be performed for each layer using a known coating device, a known heat drying device, or a known ionizing radiation irradiation device according to the type of a curable resin.

The surface protective layer 7 contains a curable resin as the main component. More specifically, a resin component of the surface protective layer 7 preferably substantially contains a curable resin. The "substantially" refers to, for example, 80 parts by mass or more when the entire resin is 100 parts by mass. The surface protective layer 7 may contain weatherproofing agents, plasticizers, stabilizers, fillers, dispersants, coloring agents, such as dyes and pigments, solvents, and the like as required.

As a material of the surface protective layer 7, an ionizing radiation-curable resin and a two-component curable urethane resin can be used, for example. The ionizing radiation-curable resin is not particularly limited. For example, a transparent resin can be used which contains, as the main component, prepolymers (including oligomers) and/or monomers containing a radically polymerizable double bond that is polymerizable and cross-linkable by irradiation with ionizing radiation, such as infrared rays, ultraviolet rays, and electron beams, in the molecules. These prepolymers or monomers can be used alone or as a mixture of two or more types thereof. Specifically, the prepolymers or the monomers include compounds having radically polymerizable unsaturated groups, such as (meth)acryloyl groups and (meth)acryloyloxy groups, and cationic polymerizable functional groups, such as epoxy groups, in the molecules. Further, polyene/thiol-based prepolymers obtained by combining polyene and polythiol are also preferable. Herein, the (meth)acryloyl group means an acryloyl group or a methacryloyl group.

Examples of the prepolymers having radically polymerizable unsaturated groups include polyester (meta)acrylate, urethane (meta)acrylate, epoxy (meta)acrylate, melamine (meta)acrylate, triazine (meta)acrylate, silicone (meta)acrylate, and the like. The molecular weights thereof are preferably about 250 to 100000.

Examples of the monomers having radically polymerizable unsaturated groups include methyl (meth)acrylate, 2-ethylhexyl (meth)acrylate, phenoxyethyl (meth)acrylate, and the like as monofunctional monomers. Examples of the polyfunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meta)acrylate, dipentaerythritol hexa(meta)acrylate, and the like.

Examples of the prepolymers having cationic polymerizable functional groups include prepolymers of epoxy resin, such as bisphenol epoxy resin and novolac epoxy compounds, and vinylether resin, such as fatty acid vinylether and aromatic vinylether.

Examples of the polyene-based prepolymers include those in which allyl alcohol is added to both ends of polyurethane by diol and diisocyanate. Examples of the thiol-based prepolymers include polythiols, such as trimethylolpropane trithioglycolate and pentaerythritol tetrathioglycolate.

As the ionizing radiation, electromagnetic waves or charged particles having energy capable of causing a curing reaction of molecules in the ionizing radiation-curable resin (composition) can be adopted, for example. Examples of the curing reaction include a crosslinking curing reaction. As an ultraviolet ray source, light sources, such as an ultra-high pressure mercury lamp, a high-pressure mercury lamp, a low-pressure mercury lamp, a carbon arc lamp, a black light, and a metal halide lamp, can be used, for example. The wavelength of the ultraviolet rays is preferably 190 nm or more and 380 nm or less, for example. As an electron beam source, an electron beam accelerator, such as a Cockcroft-Walton type, a Van de Graaf type, a resonant transformer type, an insulating core transformer type, a linear type, a Dynamitron type, or a high frequency type, can be used, for example. In particular, one capable of emitting electrons having an energy of 100 keV or more and 1000 keV or less (more preferably, electrons having an energy of 100 keV or more and 300 keV or less) is preferable.

The two-component curable urethane resin is not particularly limited. For example, one containing a polyol component having an OH group as a base compound and an isocyanate component as a curing agent component can be adopted. The polyol component having an OH group includes acrylic polyol, polyester polyol, polyether polyol, and epoxy polyol. Examples of the isocyanate component include tolylene diisocyanate, hexamethylene diisocyanate, and metaxylene diisocyanate.

### [Embossed part]

The surface protective layer 7 has embossed parts 7a containing an irregular pattern formed in the surface to give a predetermined design property. Examples of the irregular pattern include wood grain board vessel channels, stone slab surface irregularities (such as granite cleavage planes), cloth surface texture, pear-skin, sand grain, hairlines, and linear grooves. The embossed parts 7a are provided such that the irregular pattern is synchronized with the picture design of the picture design layer 5. This can impart a good texture close to texture of the real things, such as actual wood or stone, to the decorative sheet 1.

As a method for forming the irregular pattern, embossing can be adopted, for example. An embossing method is not particularly limited. For example, a known sheet-fed embossing machine or a rotary embossing machine can be used.

### [Gloss matte-expressing design part]

The gloss matte-expressing design parts 3 are regions formed of the material having light absorption properties to light of a predetermined wavelength, and are formed of a material having infrared absorption action, for example. Although the details are described later, the gloss matte-expressing design parts 3 are provided to facilitate the formation of the embossed parts 7a at desired positions (positions where the embossed parts 7a are synchronized with the picture design of the picture design layer 5), i.e., to facilitate the imparting of texture close to texture of actual wood or stone to the decorative sheet 1.

In this embodiment, the gloss matte-expressing design parts 3 are formed using ink containing the material having infrared absorption action, for example. As ink used for the gloss matte-expressing design parts 3, a urethane-based printing ink can be used, for example.

The color tone of the ink used for the gloss matte-expressing design parts 3 is not particularly limited, and a dark-colored ink (a black ink) or light-colored ink that is colorless and transparent or relatively close to transparent can be used. The color tone (shading) of the ink can be selected as appropriate according to the design to be expressed or the like.

In the decorative sheet 1 according to this embodiment, the gloss matte-expressing design parts 3 are provided under the colored thermoplastic resin layer 2. Therefore, when the decorative sheet 1 is viewed from the side of the surface protective layer 7, the visibility of the gloss matte-expressing design parts 3 decreases. As a result, in the case of using a high-concentration black ink having infrared absorption properties as the gloss matte-expressing design parts 3, when the decorative sheet 1 is viewed from the side of the surface protective layer 7, the visibility of the black ink forming the gloss matte-expressing design parts 3 can be reduced. This eliminates the necessity of using a dark-colored design as the picture design layer 5 to reduce the visibility of the gloss matte-expressing design parts 3 containing ink, and, as a result, a light-colored design can be adopted as the picture design layer 5.

Thus, the decorative sheet 1 according to this embodiment can suppress the restrictions on pattern expression by the picture design layer 5 caused by providing the gloss matte-expressing design parts 3, and can express designs close to designs of the real things, such as actual wood and stone.

The decorative sheet 1 according to this embodiment can further reduce the visibility of the gloss matte-expressing design parts 3 from the side of the surface protective layer 7 by the use of a colorless and transparent or light-colored ink as the ink containing the material having infrared absorption action. Therefore, even in the case of a light-colored background color or picture design pattern close to a white color, it can be visually recognized in the original color tone, and the intended color tone can be more appropriately expressed. Therefore, the decorative sheet 1 according to this embodiment can express a good color tone close to color tones of the real things, such as actual wood or stone.

The gloss matte-expressing design parts 3 may have infrared transmittance at a wavelength of 2000 nm of preferably 60% or less, more preferably 40% or less, and still more preferably 15% or less. More specifically, it may be acceptable that the gloss matte-expressing design parts 3 are formed of the ink containing the material having infrared absorption action, and has infrared transmittance at a wavelength of 2000 nm of 60% or less as the infrared absorption effect of the ink. In the gloss matte-expressing design parts 3, the gloss can be suppressed and a sufficient gloss matte effect can be obtained by setting the infrared transmittance at a wavelength of 2000 nm to 60% or less.

As the material having infrared absorption action in the gloss matte-expressing design parts 3, at least one type of inorganic materials, such as carbon black, tin-doped indium oxide (ITO), antimony-doped tin oxide (ATO), lanthanum hexaboride (LaB₆), and cesium-doped tungsten oxide, can be used. Further, near-infrared absorbing materials, infrared absorbing materials, organic materials, such as phthalocyanine-based materials, and the existing materials having infrared absorption action can be used.

The gloss matte-expressing design parts 3 are arranged at positions where the gloss matte-expressing design parts 3 are synchronized with the picture design of the picture design layer 5. For example, in the case of the picture design layer 5 having a wood grain pattern, the gloss matte-expressing design parts 3 are formed at positions where the gloss matte-expressing design parts 3 overlap with wood grain board vessel channels of the picture design layer 5 in plan view. Herein, the "synchronization" used herein refers to the fact that the gloss matte-expressing design parts 3 are formed at positions where the gloss matte-expressing design parts 3 and the picture design of the picture design layer 5 overlap with each other in plan view.

The thickness of the gloss matte-expressing design parts 3 may be such that the transparent thermoplastic resin layer 6 and the surface protective layer 7 can be softened to the extent that the irregular shape can be formed sufficiently in the surface protective layer 7 in embossing described later. To obtain a sufficient gloss matte effect, a glossiness difference between portions where the gloss matte-expressing design parts 3 are formed and portions where the gloss matte-expressing design parts 3 are not formed is preferably 5 or more, i.e., the image density level is preferably 60% or more.

By providing the gloss matte-expressing design parts 3 under the colored thermoplastic resin layer 2, the decorative sheet 1 can improve the bending processability when processed into a decorative member.

### [Light of predetermined wavelength]

As described above, the gloss matte-expressing design parts 3 are formed of the material having light absorption properties to light of a predetermined wavelength. Examples of the light of a predetermined wavelength include, in addition to the infrared rays described above, ultraviolet rays, visible rays, electron beams, X-rays, ion beams, and the like.

### [Pattern layer]

The pattern layer 8a is formed on the surface on the side opposite to the picture design layer 5 of the colored thermoplastic resin layer 2. The pattern layer 8a contains only the gloss matte-expressing design parts 3 formed of a material having light absorption properties to infrared rays, for example.

### [Primer layer]

The primer layer 8 is a layer serving as the base, and is a layer for improving the adhesiveness with a substrate, not illustrated, to which the decorative sheet 1 is attached and the corrosion resistance. The primer layer 8 is provided on the side opposite to the colored thermoplastic resin layer 2 of the pattern layer 8a.

The primer layer 8 is formed using polyester resin, organic additives, pigments, and the like, for example. In the primer layer 8, anti-rust pigments may be compounded to improve the corrosion resistance. The primer layer 8 has a thickness in the range of 1 µm or more and 10 µm or less, for example.

### [Method for manufacturing decorative sheet]

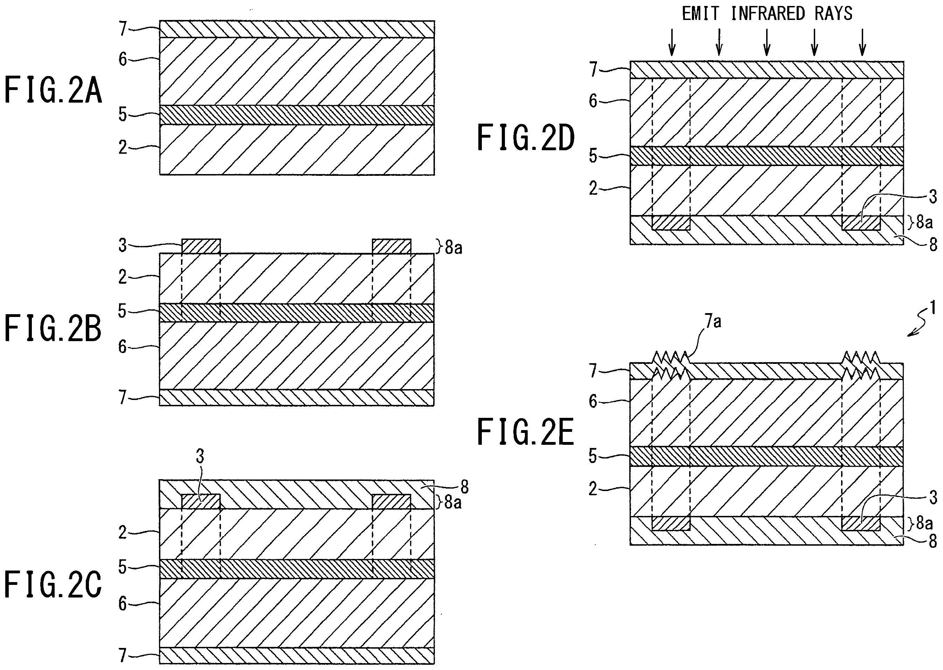

Next, one example of a method for manufacturing a decorative sheet according to this embodiment will be described in connection with FIGS. 2A to 2E.

First, the colored thermoplastic resin layer 2 is formed. The colored thermoplastic resin layer 2 is formed with a thickness of, for example, 50 µm using PBT (polybutylene terephthalate resin), for example, (FIG. 2A).

Next, the picture design layer 5 is printed on the colored thermoplastic resin layer 2 using a urethane-based printing ink, for example, and then 38 µm thick PP (polypropylene), for example, is deposited as the transparent thermoplastic resin layer 6 on the picture design layer 5. Then, the surface protective layer 7 is deposited on the transparent thermoplastic resin layer 6. More specifically, as illustrated in FIG. 2A, a depositing step is carried out in which the picture design layer 5, the transparent thermoplastic resin layer 6, and the surface protective layer 7 are deposited in this order on one surface of the colored thermoplastic resin layer 2.

Next, the gloss matte-expressing design parts 3, which are regions containing the material having light absorption properties to light of a predetermined wavelength, are formed to form the pattern layer 8a on the side opposite to the picture design layer 5 of the colored thermoplastic resin layer 2. More specifically, a step is carried out in which the gloss matte-expressing design parts 3, which are regions containing the material having infrared absorption action, are arranged in synchronization with the picture design to form the pattern layer 8a. For example, the gloss matte-expressing design parts 3 are formed using ink (black ink or light-colored (including colorless and transparent) ink) containing the material having infrared absorption action at the predetermined positions where the gloss matte-expressing design parts 3 are synchronized with the picture design of the picture design layer 5 (FIG. 2B).

Next, the primer layer 8 formed of, for example, polyester resin, is deposited to fill gaps between the gloss matte-expressing design parts 3 and cover the upper surfaces of the gloss matte-expressing design parts 3 on the colored thermoplastic resin layer 2 containing the gloss matte-expressing design parts 3 (FIG. 2C).

Subsequently, infrared rays (irradiation light) are emitted to the entire multi-layer body in which these layers are deposited (FIG. 2D), and immediately after the irradiation with the infrared rays, an embossing plate, such as an embossing roll, is pressed to the surface of the surface protective layer 7 (FIG. 2E). This forms the embossed parts 7a, so that the decorative sheet 1 is formed. More specifically, a step of emitting irradiation light (e.g., infrared rays) in which the power of light of a predetermined wavelength is higher than the power of light of another wavelength, and a step of, after the step of emitting the irradiation light, pressing an embossing plate for forming an embossed shape to the surface protective layer 7 are carried out.

Herein, the gloss matte-expressing design parts 3 are formed of ink having infrared absorption properties. Therefore, when the multi-layer body is irradiated with infrared rays, the transparent thermoplastic resin layer 6 and the surface protective layer 7 are more likely to be softened in portions overlapping with the gloss matte-expressing design parts 3 than portions not overlapping with the gloss matte-expressing design parts 3 of the surface protective layer 7 in plan view. More specifically, the transparent thermoplastic resin layer 6 and the surface protective layer 7 after the irradiation with infrared rays have portions that are likely to be softened and portions that are less likely to be softened. Therefore, when an embossing plate is pressed to the transparent thermoplastic resin layer 6 and the surface protective layer 7 in this state, the softened portions are likely to form irregularities, while the portions that are less likely to be softened are less likely to form irregularities. Therefore, irregularities are likely to be formed in the softened portions of the transparent thermoplastic resin layer 6 and the surface protective layer 7, i.e., portions overlapping with the gloss matte-expressing design parts 3 in plan view. Therefore, the embossed parts 7a containing the irregular shape synchronized with the gloss matte-expressing design parts 3 are likely to be formed only at positions where the embossed parts 7a overlap with the gloss matte-expressing design parts 3 of the transparent thermoplastic resin layer 6 and the surface protective layer 7 in plan view. In the gloss matte-expressing design parts 3, the infrared transmittance at a wavelength of 2000 nm is set to 60% or less by the ink having infrared absorption properties. Therefore, the gloss is suppressed and a sufficient gloss matte effect can be obtained.

This allows the formation of the embossed parts 7a at the positions where the embossed parts 7a are synchronized with the picture design layer 5, i.e., the embossed parts 7a synchronized with the picture design layer 5 can be easily created without performing highly accurate positioning operation. Therefore, the decorative sheet 1 can be provided which has texture close to texture of the real things, expresses a good color tone close to color tones of the real things, and has an excellent design property.

The timing when the embossing plate is pressed to the transparent thermoplastic resin layer 6 and the surface protective layer 7 after the irradiation with infrared rays is not limited to immediately after the irradiation with infrared rays, and may be any timing at which the irregular shapes can be selectively formed in the portions softened by the irradiation with infrared rays by pressing the embossing plate to the surfaces of the transparent thermoplastic resin layer 6 and the surface protective layer 7.

Between the step of creating the surface protective layer 7 and the step of performing the irradiation with infrared rays, other steps may be included. In short, the irradiation with infrared rays only needs to be performed in a state in which the transparent thermoplastic resin layer 6 and the surface protective layer 7 are formed.

Thus, according to the method for manufacturing the decorative sheet 1 of this embodiment, the multi-layer body in which the layers are deposited is irradiated with infrared rays, and then the embossing plate is pressed, so that the embossing can be strongly performed to the portions overlapping with the gloss matte-expressing design parts 3 in plan view. More specifically, the embossed parts 7a can be easily formed at desired positions even when the positioning of the region where the embossing plate is pressed is not performed with high accuracy. As a result, a decorative sheet having an excellent design property can be easily obtained.

Further, the gloss matte-expressing design parts 3 are provided under the colored thermoplastic resin layer 2, and therefore, when the decorative sheet 1 is viewed from the side of the surface protective layer 7, the visibility of the gloss matte-expressing design parts 3 decreases. As a result, although the colorless and transparent or light-colored ink having infrared absorption properties is used as the gloss matte-expressing design parts 3, the visual recognition of the gloss matte-expressing design parts 3 can be further suppressed when the decorative sheet 1 is viewed from the side of the surface protective layer 7. Therefore, even when a dark-colored pattern is not used as the picture design layer 5, the visual recognition of the gloss matte-expressing design parts 3 can be significantly suppressed, and as a result, it becomes possible to adopt a light-colored design as the picture design layer 5, and the restrictions on the pattern expression by the picture design layer 5 caused by providing the gloss matte-expressing design parts 3 can be significantly suppressed.

Further, the colored thermoplastic resin layer 2 and the picture design layer 5, and further the transparent thermoplastic resin layer 6 and the surface protective layer 7 are deposited on the pattern layer 8a containing the gloss matte-expressing design parts 3 using the colorless and transparent or light-colored ink containing the material having infrared absorption properties, and the embossed parts 7a are formed at the positions where the embossed parts 7a overlap with the gloss matte-expressing design parts 3 in plan view of the surface protective layer 7. Therefore, the visibility of the gloss matte-expressing design parts 3 can be further reduced, and the influence of the gloss matte-expressing design parts 3 useful in the process of manufacturing the decorative sheet 1 on the appearance of the decorative sheet 1 can be significantly suppressed, so that the decorative sheet 1 having a high design property in which the picture design of the picture design layer 5 and the embossed parts 7a are synchronized with each other can be obtained.

Further, the gloss matte-expressing design parts 3 are provided in synchronization with the picture design of the picture design layer 5, and therefore an irregular portion synchronized with the picture design of the picture design layer 5 can be formed. More specifically, the gloss matte effect synchronized with the picture design can be easily expressed.

Further, the gloss matte expression is performed by providing the irregularities, and therefore the abrasion resistance of a gloss matte design is improved, and the occurrence of gloss matte design peeling or the like can be suppressed. Therefore, synchronized gloss matte expression can be performed also in flooring materials and the like, for example.

### [Advantageous effects of this embodiment]

(1) The decorative sheet 1 according to this embodiment is the decorative sheet having the picture design layer 5, and including: the picture design layer 5, the transparent thermoplastic resin layer 6, and the surface protective layer 7 sequentially deposited on one surface of the colored thermoplastic resin layer 2; in which the gloss matte-expressing design parts 3 which are the regions containing the predetermined material having light absorption properties to infrared rays as compared with the colored thermoplastic resin layer 2 are arranged in synchronization with the picture design of the picture design layer 5 on the other surface of the colored thermoplastic resin layer 2, the gloss matte-expressing design parts 3 have infrared transmittance at a wavelength of 2000 nm of 60% or less, and the embossed parts 7a are formed at positions where the embossed parts 7a overlap with the gloss matte-expressing design parts 3 in plan view of the surface protective layer 7.

This makes it possible to provide the embossed parts 7a at the positions where the embossed parts 7a are synchronized with the picture design layer 5, and gloss can be suppressed by the infrared absorption properties in the gloss matte-expressing design parts 3 and the gloss matte effect can be sufficiently obtained in the decorative sheet 1. The visibility of the gloss matte-expressing design parts 3 from the side of the surface protective layer 7 can be reduced. Further, the gloss matte expression is performed by providing irregularities, and therefore the abrasion resistance of a gloss matte design is improved, so that the occurrence of the gloss matte design peeling or the like can be suppressed.

As a result, the decorative sheet having texture closer to texture of the real things, having an excellent design property, and capable of suppressing the design peeling can be obtained.

(2) In the decorative sheet 1 according to this embodiment, at least one inorganic material among carbon black, tin-doped indium oxide, antimony-doped tin oxide, lanthanum hexaboride, and cesium-doped tungsten oxide can be used as the material having light absorption properties to infrared rays contained in the gloss matte-expressing design parts 3.

Thus, the transparent thermoplastic resin layer 6 and the surface protective layer 7 are more reliably softened by the irradiation with infrared rays in the portions overlapping with the gloss matte-expressing design parts 3, making it possible to more reliably perform strong embossing in the portions overlapping with the gloss matte-expressing design parts 3. As a result, the decorative sheet having an excellent design property can be more easily obtained.

### [Modifications]

(1) The above-described embodiment describes the case in which the material having infrared absorption properties is used as the gloss matte-expressing design part 3, and the transparent thermoplastic resin layer 6 and the surface protective layer 7 are partially softened by the irradiation with infrared rays, but the present invention is not limited thereto. The transparent thermoplastic resin layer 6 and the surface protective layer 7 may be partially softened by the use of a material containing optional ink containing a component having light absorption properties to a light of a predetermined wavelength other than infrared rays as the material of the gloss matte-expressing design part 3 and by the use of a light source emitting the light of a predetermined wavelength.

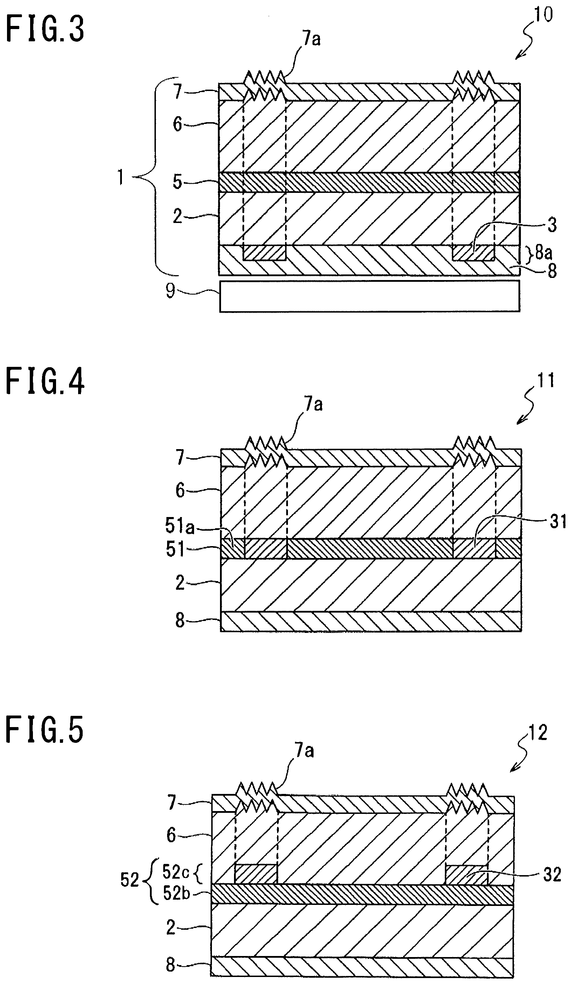

(2) As illustrated in FIG. 3, the decorative sheet 1 according to this embodiment may be pasted to a substrate 9, which is a substrate for a decorative material, to form a decorative member 10. In the decorative member 10, the decorative sheet 1 only needs to be provided on at least one surface side of the substrate 9, and may be provided on both surfaces.

### [Substrate]

As the substrate 9, wood substrates or metal substrates can be used. As the wood substrate, wood veneer, wood plywood, glued laminated wood, particle board, medium density fiberboard, and hard fiberboard can be adopted, for example. As the metal substrates, steel plates, aluminum plates, and the like can be used. The substrate 9 may also be resin, such as plastic, or a composite material thereof. More specifically, the substrate 9 may be a resin substrate. The substrate 9 may also be a noncombustible substrate containing a noncombustible steel plate or a non-combustible material specified in Ministry of Construction Notification No. 1400, for example.

Thus, the decorative member 10 includes the substrate 9 and the decorative sheet 1 provided on at least one surface side of the substrate 9. The substrate 9 can be any of the wood substrate, the resin substrate, the noncombustible substrate, or the metal substrate. This makes it to possible to provide a decorative material having texture closer to texture of the real things, having an excellent design property, and capable of suppressing the design peeling.

### [Second embodiment]

Next, a second embodiment of the present invention will be described.

Although the above-described first embodiment has the configuration in which the gloss matte-expressing design parts, which are the regions containing the material having light absorption properties to infrared rays, are provided under the colored thermoplastic resin layer, the gloss matte-expressing design parts may be provided in the picture design layer. More specifically, a configuration may be acceptable in which the picture design layer may have the gloss matte-expressing design parts.

For example, as illustrated in FIG. 4, a decorative sheet 11 according to this embodiment may be configured such that gloss matte-expressing design parts 31 are formed as part of a picture design layer 51, and the gloss matte-expressing design parts 31 and non-gloss matte-expressing design parts 51a form one picture design. The decorative sheet 11 is different from the decorative sheet 1 in the above-described first embodiment in that the gloss matte-expressing design parts 31 are provided as part of the picture design layer 51.

For example, in the case of the picture design layer 51 of a wood grain pattern, the gloss matte-expressing design parts 31 are arranged at positions where the gloss matte-expressing design parts 31 overlap with wood grain board vessel channels of the picture design layer 51. In this embodiment, the gloss matte-expressing design parts 31 are formed of a material containing a black ink having carbon black. The gloss matte-expressing design parts 31 in this embodiment have infrared transmittance at a wavelength of 2000 nm of preferably 60% or less, more preferably 40% or less, and still more preferably 15% or less as with the gloss matte-expressing design parts 3 in the above-described first embodiment.

The picture design layer 51 has the gloss matte-expressing design parts 31 containing the material containing a black ink and the non-gloss matte-expressing design parts 51a, and the gloss matte-expressing design parts 31 and the non-gloss matte-expressing design parts 51a form one layer forming one picture design. The gloss matte-expressing design parts 31 are arranged at positions where the gloss matte-expressing design parts 31 are to be synchronized with the embossed parts 7a of the picture design of the picture design layer 51.

Printing ink of the non-gloss matte-expressing design parts 51a is a mixture of a solvent and solids, such as a coloring agent and a binder resin. More specifically, the non-gloss matte-expressing design parts 51a may have the same configuration as that of the picture design layer 5 in the above-described first embodiment.

In FIG. 4, the same configurations as those of the above-described first embodiment are attached with the same reference signs, and descriptions thereof are omitted.

When the picture design layer 51 is created in this embodiment, it may be acceptable that the gloss matte-expressing design parts 31 are formed at positions where the gloss matte-expressing design parts 31 are synchronized with the embossed parts 7a of the picture design of the picture design layer 51 using a urethane-based black ink including carbon black and the non-gloss matte-expressing design parts 51a are formed in other regions, for example.

Thus, the decorative sheet 11 according to this embodiment is the decorative sheet having the picture design layer 51, and including: the picture design layer 51, the transparent thermoplastic resin layer 6, and the surface protective layer 7 sequentially deposited on one surface of the colored thermoplastic resin layer 2; in which the picture design layer 51 has the gloss matte-expressing design parts 31 which are the regions containing the predetermined material having light absorption properties to infrared rays as compared with the transparent thermoplastic resin layer 6, the gloss matte-expressing design parts 31 have infrared transmittance at a wavelength of 2000 nm of 60% or less, and the embossed parts 7a are formed at positions where the embossed parts 7a overlap with the gloss matte-expressing design parts 31 in plan view of the surface protective layer 7.

This makes it possible to provide the embossed parts 7a at the positions where the embossed parts 7a are further synchronized with the picture design of the picture design layer 51, and gloss can be suppressed by the infrared absorption properties in the gloss matte-expressing design parts 31 and the gloss matte effect can be sufficiently obtained in the decorative sheet 11. Further, the gloss matte expression is performed by providing irregularities, and therefore the abrasion resistance of a gloss matte design is improved, so that the occurrence of the gloss matte design peeling or the like can be suppressed.

As a result, the decorative sheet having texture closer to texture of the real things, having an excellent design property, and capable of suppressing the design peeling can be obtained.

Part of the picture design of the picture design layer 51 may be formed by the gloss matte-expressing design parts 31. This makes it possible to provide the embossed parts 7a at positions where the embossed parts 7a are more reliably synchronized with the picture design (e.g., wood grain board vessel channels), makes it possible to make the gloss matte-expressing design parts 31 using a black ink visible as part of the picture design, and makes it possible to further improve the design property by the gloss matte effect.

### [Modifications]

(1) The above-described embodiment describes the case where the gloss matte-expressing design parts 31 are part of the picture design layer 51, and the picture design layer 51 is provided in which one picture design is formed by the gloss matte-expressing design parts 31 and the non-gloss matte-expressing design parts 51a, but the configuration of a decorative sheet according to this embodiment is not limited thereto. For example, as illustrated in FIG. 5, a decorative sheet 12 according to a first modification of this embodiment may have gloss matte-expressing design parts 32 provided on a main picture design layer 52b. In FIG. 5, the same configurations as those of the above-described first embodiment are attached with the same reference signs, and descriptions thereof are omitted.

Specifically, in the decorative sheet 12, a picture design layer 52 includes the main picture design layer 52b and a pattern layer 52c deposited on the main picture design layer 52b. The pattern layer 52c contains only the gloss matte-expressing design parts 32 arranged to be synchronized with the embossed parts 7a. The picture design of the picture design layer 52 is mainly formed by the main picture design layer 52b, and the pattern layer 52c, i.e., the gloss matte-expressing design parts 32, is formed of a material making the main picture design layer 52b visible. Specifically, the gloss matte-expressing design parts 32 are formed of a colorless and transparent or light-colored ink containing not the material containing a black ink but the material having infrared absorption action unlike the gloss matte-expressing design parts 31 according to the above-described second embodiment. The gloss matte-expressing design parts 32 in this embodiment only needs to have infrared transmittance at a wavelength of 2000 nm of preferably 60% or less, more preferably 40% or less, and still preferably 15% or less as with the gloss matte-expressing design parts 3 in the above-described first embodiment.

In the gloss matte-expressing design parts 32 in this embodiment, at least one type of inorganic materials, such as tin-doped indium oxide (ITO), antimony-doped tin oxide (ATO), lanthanum hexaboride (LaB₆), and cesium-doped tungsten oxide can be used as the material having infrared absorption action. More specifically, the gloss matte-expressing design parts 32 are formed of the colorless and transparent or light-colored ink having infrared absorption properties and making the main picture design layer 52b visible.

In this embodiment, when the picture design layer 52 is created, the main picture design layer 52b is deposited on the colored thermoplastic resin layer 2, the gloss matte-expressing design parts 32 are formed as the pattern layer 52c on the main picture design layer 52b, and the transparent thermoplastic resin layer 6 is deposited on the pattern layer 52c. More specifically, the transparent thermoplastic resin layer 6 is deposited to fill gaps between the gloss matte-expressing design parts 32 and cover the upper surfaces of the gloss matte-expressing design parts 32 on the main picture design layer 52b and the gloss matte-expressing design parts 32.

Thus, the decorative sheet 12 according to this embodiment is the decorative sheet having the picture design layer 52, and including: the picture design layer 52, the transparent thermoplastic resin layer 6, and the surface protective layer 7 sequentially deposited on one surface of the colored thermoplastic resin layer 2; in which the picture design layer 52 has the main picture design layer 52b forming the picture design and the gloss matte-expressing design parts 32 which are the regions containing the predetermined material having light absorption properties to infrared rays as compared with the transparent thermoplastic resin layer 6, and the gloss matte-expressing design parts 32 are formed on the main picture design layer 52b to be synchronized with the picture design.

This makes it possible to obtain the same operational effects as those of the above-described second embodiment, even when the gloss matte-expressing design parts 32 are deposited on the main picture design layer 52b. Further, the gloss matte-expressing design parts 32 are formed using a colorless and transparent material or a light-colored material that is relatively close to transparent, and therefore, even when the gloss matte-expressing design parts 32 are deposited on the main picture design layer 52b, the picture design of the main picture design layer 52b can be visually recognized through the gloss matte-expressing design parts 32.

The gloss can be suppressed by the infrared absorption properties in the gloss matte-expressing design parts 32, and the gloss matte effect can be sufficiently obtained. Further, the gloss matte expression is performed by providing the irregularities, and therefore the abrasion resistance of the gloss matte design is improved, and the occurrence of the gloss matte design peeling or the like can be suppressed.

As a result, the decorative sheet having texture closer to texture of the real things, having an excellent design property, and capable of suppressing the design peeling can be obtained.

(2) The decorative sheet 11 according to the above-described second embodiment may be pasted to a substrate for decorative materials to form a decorative member. In this case, as the substrate for decorative materials, the substrate 9 (see FIG. 3) in the decorative member 10 according to the modification of the first embodiment described above can be used. At this time, the decorative sheet 11 only needs to be provided on at least one surface side of the substrate 9, and may be provided on both surfaces. In place of the decorative sheet 11, the decorative sheet 12 may be provided on at least one surface side of the substrate 9 to form a decorative material. This makes it possible to provide a decorative member having texture closer to texture of the real things, having an excellent design property, and capable of suppressing the design peeling as with the decorative member 10 according to the modification of the first embodiment described above.

### [Third embodiment]

Next, a third embodiment of the present invention will be described.

The first embodiment and the second embodiment described above are configured such that the gloss matte-expressing design parts, which are the regions containing the material having light absorption properties to infrared rays, are provided either under the colored thermoplastic resin layer or in the picture design layer, but the configuration of the decorative sheet in the present invention is not limited thereto. For example, the gloss matte-expressing design parts may be provided both under the colored thermoplastic resin layer and in the picture design layer.

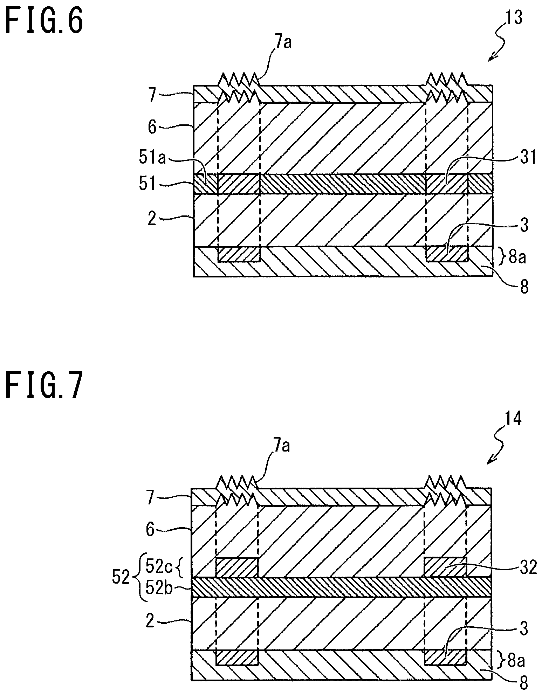

For example, as illustrated in FIG. 6, a decorative sheet 13 according to this embodiment may be configured such that the gloss matte-expressing design parts 3 are provided under the colored thermoplastic resin layer 2 and the gloss matte-expressing design parts 31 are part of the picture design layer 51, and the gloss matte-expressing design parts 31 and the non-gloss matte-expressing design parts 51a form one picture design. The decorative sheet 13 is different from the decorative sheets 1 in the first embodiment and the second embodiment described above in that the decorative sheet 13 includes the gloss matte-expressing design parts 3 provided under the colored thermoplastic resin layer 2 and the gloss matte-expressing design parts 31 provided as part of the picture design layer 51. In the decorative sheet 13 illustrated in FIG. 6, the same configurations as those of the above-described first embodiment and the above-described second embodiment are attached with the same reference signs, and descriptions thereof are omitted.

As illustrated in FIG. 6, in the decorative sheet 13, the picture design layer 51 has the gloss matte-expressing design parts 31 and the non-gloss matte-expressing design parts 51a, and the gloss matte-expressing design parts 31 and the non-gloss matte-expressing design parts 51a form one layer forming one picture design as with the above-described second embodiment. For example, when the picture design layer 51 has a wood grain pattern, the gloss matte-expressing design parts 31 are arranged at positions where the gloss matte-expressing design parts 31 overlap with wood grain board vessel channels of the picture design layer 51.

In the decorative sheet 13 according to this embodiment, the gloss matte-expressing design parts 3 are provided under the colored thermoplastic resin layer 2 as with the above-described first embodiment. In this embodiment, the gloss matte-expressing design parts 3 are arranged at the positions where the gloss matte-expressing design parts 3 are synchronized with the picture design of the picture design layer 51. For example, when the picture design layer 51 has a wood grain pattern, the gloss matte-expressing design parts 3 are formed at positions where the gloss matte-expressing design parts 3 overlap with wood grain board vessel channels of the picture design layer 51 in plan view. More specifically, the gloss matte-expressing design parts 3 are arranged to be synchronized with the above-described part of the picture design of the picture design layer (picture design formed by the gloss matte-expressing design parts 31).

Therefore, as illustrated in FIG. 6, in the decorative sheet 13, the gloss matte-expressing design parts 3 arranged at the positions where the gloss matte-expressing design parts 3 are synchronized with the picture design of the picture design layer 51 and the gloss matte-expressing design parts 31 provided as part of the picture design layer 51 are provided at positions where the gloss matte-expressing design parts 3 and the gloss matte-expressing design parts 31 overlap with each other in plan view.

This makes it possible to provide the embossed parts 7a at positions where the embossed parts 7a are more reliably synchronized with the picture design of the picture design layer 51, and gloss can be further suppressed by the infrared absorption properties in the gloss matte-expressing design parts 3 and the gloss matte-expressing design parts 31 and the gloss matte effect can be more sufficiently obtained in the decorative sheet 13. The visibility of the gloss matte-expressing design parts 3 from the side of the surface protective layer 7 can be reduced. Further, the gloss matte expression is performed by providing irregularities, and therefore the abrasion resistance of a gloss matte design is improved, so that the occurrence of the gloss matte design peeling or the like can be suppressed.

Thus, the decorative sheet 13 according to this embodiment is the decorative sheet having the picture design layer 51, and including: the picture design layer 51, the transparent thermoplastic resin layer 6, and the surface protective layer 7 sequentially deposited on one surface of the colored thermoplastic resin layer 2.

The picture design layer 51 has the gloss matte-expressing design parts 31 which are the regions containing the predetermined material having light absorption properties to infrared rays as compared with the transparent thermoplastic resin layer 6, and the gloss matte-expressing design parts 31 have infrared transmittance at a wavelength of 2000 nm of 60% or less. Part of the picture design of the picture design layer 51 is formed by the gloss matte-expressing design parts 31.

Further, in the decorative sheet 13, the gloss matte-expressing design parts 3 which are the regions containing the predetermined material having light absorption properties to infrared rays as compared with the colored thermoplastic resin layer 2 are arranged in synchronization with the above-described part (gloss matte-expressing design parts 31) of the picture design of the picture design layer 51 on the other surface of the colored thermoplastic resin layer 2, and the gloss matte-expressing design parts 3 have infrared transmittance at a wavelength of 2000 nm of 60% or less.

The embossed parts 7a are formed at positions where the embossed parts 7a overlap with the gloss matte-expressing design parts 3 and the gloss matte-expressing design parts 31 in plan view of the surface protective layer 7.

The decorative sheet 13 can obtain the same operational effects as those of the first embodiment and the second embodiment described above by the above-described configuration. As a result, the decorative sheet having texture closer to texture of the real things, having a more excellent design property, and capable of more reliably suppressing the design peeling can be obtained.

### [Modifications]

(1) The above-described third embodiment (this embodiment) describes the configuration in which the gloss matte-expressing design parts are provided both under the colored thermoplastic resin layer and in the picture design layer, and the gloss matte-expressing design parts and the non-gloss matte-expressing design parts form one picture design in the picture design layer, but the configuration of a decorative sheet according to this embodiment is not limited thereto. For example, as illustrated in FIG. 7, in a decorative sheet 14 according to a first modification of this embodiment (third embodiment), the gloss matte-expressing design parts 3 may be provided under the colored thermoplastic resin layer 2 and the gloss matte-expressing design parts 32 may be provided on the main picture design layer 52b in the picture design layer 52. In FIG. 7, the same configurations as those of the decorative sheet 1 of the first embodiment and the decorative sheet 12 of the first modification of the second embodiment described above are attached with the same reference signs, and descriptions thereof are omitted.

As illustrated in FIG. 7, in the decorative sheet 14, the picture design layer 52 includes the main picture design layer 52b and the pattern layer 52c deposited on the main picture design layer 52b as with the first modification of the second embodiment described above. The pattern layer 52c includes only the gloss matte-expressing design parts 32 arranged at positions of a picture design (e.g., wood grain board vessel channels in a wood grain pattern) to be synchronized with the embossed parts 7a. More specifically, the gloss matte-expressing design parts 32 are arranged at positions where the gloss matte-expressing design parts 32 are synchronized with a picture design formed by the main picture design layer 52b. The picture design of the picture design layer 52 is mainly formed by the main picture design layer 52b, and the pattern layer 52c, i.e., the gloss matte-expressing design parts 32, is formed of a material capable of making the main picture design layer 52b visible. The gloss matte-expressing design parts 32 may be formed of the colorless and transparent or light-colored ink containing not the material containing a black ink but the material having infrared absorption action as with the first modification of the second embodiment described above.

In the decorative sheet 14 according to this embodiment, the gloss matte-expressing design parts 3 are provided under the colored thermoplastic resin layer 2 as with the above-described third embodiment. In this modification, the gloss matte-expressing design parts 3 are arranged at the positions where the gloss matte-expressing design parts 3 are synchronized with the picture design (e.g., wood grain board vessel channels in a wood grain pattern) of the picture design layer 52 (main picture design layer 52b). Therefore, as illustrated in FIG. 7, in the decorative sheet 14, the gloss matte-expressing design parts 3 arranged at the positions where the gloss matte-expressing design parts 3 are synchronized with the picture design of the main picture design layer 52b and the gloss matte-expressing design parts 32 constituting the pattern layer 52c deposited on the main picture design layer 52b are provided at positions where the gloss matte-expressing design parts 3 and the gloss matte-expressing design parts 32 overlap with each other in plan view.

This makes it possible to provide the embossed parts 7a at positions where the embossed parts 7a are more reliably synchronized with the picture design (main picture design layer 52b) of the picture design layer 52, and gloss can be further suppressed by the infrared absorption properties in the gloss matte-expressing design parts 3 and the gloss matte-expressing design parts 32 and the gloss matte effect can be more sufficiently obtained even when the gloss matte-expressing design parts 32 are deposited on the main picture design layer 52b. The visibility of the gloss matte-expressing design parts 3 from the side of the surface protective layer 7 can be reduced. Further, the gloss matte expression is performed by providing irregularities, and therefore the abrasion resistance of a gloss matte design is improved, so that the occurrence of the gloss matte design peeling or the like can be suppressed.

The gloss matte-expressing design parts 32 are formed using a colorless and transparent material or a light-colored material that is relatively close to transparent, and therefore, even when the gloss matte-expressing design parts 32 are deposited on the main picture design layer 52b, the picture design of the main picture design layer 52b can be visually recognized through the gloss matte-expressing design parts 32 as with the first modification of the second embodiment described above.

The gloss matte-expressing design parts 32 may be formed of the material containing a black ink having carbon black as with the gloss matte-expressing design parts 31. In this case, when the picture design layer 52 has a wood grain pattern, for example, wood grain board vessel channels may be expressed by the gloss matte-expressing design parts 32. In the picture design layer 52, the pattern layer 52c containing the gloss matte-expressing design parts 32 forms part of the picture design, and thus the embossed parts 7a can be provided at positions where the embossed parts 7a are more reliably synchronized with the picture design (e.g., wood grain board vessel channels), and the gloss matte-expressing design parts 32 using a black ink can be visually recognized as part of the picture design.

Thus, the decorative sheet 14 according to this embodiment is the decorative sheet having the picture design layer 52, and including: the picture design layer 52, the transparent thermoplastic resin layer 6, and the surface protective layer 7 sequentially deposited on one surface of the colored thermoplastic resin layer 2.

On the other surface of the colored thermoplastic resin layer 2, the gloss matte-expressing design parts 3 which are the regions containing the predetermined material having light absorption properties to infrared rays as compared with the colored thermoplastic resin layer 2 are arranged in synchronization with the picture design of the picture design layer 52, and the gloss matte-expressing design parts 3 have infrared transmittance at a wavelength of 2000 nm of 60% or less.

The picture design layer 52 has the main picture design layer 52b forming the picture design and the gloss matte-expressing design parts 32 which are the regions containing the predetermined material having light absorption properties to infrared rays as compared with the transparent thermoplastic resin layer 6, and the gloss matte-expressing design parts 32 have infrared transmittance at a wavelength of 2000 nm of 60% or less. The gloss matte-expressing design parts 32 are formed on the main picture design layer 52b to be synchronized with the above-described picture design.

The embossed parts 7a are formed at positions where the embossed parts 7a overlap with the gloss matte-expressing design parts 3 and the gloss matte-expressing design parts 32 in plan view of the surface protective layer 7.

The decorative sheet 14 can obtain the same operational effects as those of the first embodiment and the first modification of the second embodiment described above by the above-described configuration. As a result, the decorative sheet having texture closer to texture of the real things, having a more excellent design property, and capable of more reliably suppressing the design peeling can be obtained.

(2) The decorative sheet 13 according to the above-described third embodiment may be pasted to a substrate for decorative material to form a decorative member. In this case, as the substrate for decorative materials, the substrate 9 (see FIG. 3) in the decorative member 10 according to the modification of the first embodiment described above can be used. At this time, the decorative sheet 13 only needs to be provided on at least one surface side of the substrate 9, and may be provided on both surfaces. In place of the decorative sheet 13, the decorative sheet 14 may be provided on at least one surface side of the substrate 9 to form a decorative material. This makes it possible to provide a decorative member having texture closer to texture of the real things, having an excellent design property, and capable of suppressing the design peeling as with the decorative member 10 according to the modification of the first embodiment described above.

The present invention is described in more detail with Examples. The present invention is not limited by Examples at all.

### <Examples>

### (Example 1)

On one surface of the colored thermoplastic resin layer 2 containing a 55 µm thick PE (polyethylene) layer, the picture design layer 5 containing a urethane-based printing ink, the transparent thermoplastic resin layer 6 containing a 90 µm thick PP (polypropylene) layer, and the surface protective layer 7 mainly composed of an ultraviolet curable resin containing an acrylic resin composition were deposited in this order. On the other surface (surface on the side opposite to the picture design layer 5) of the colored thermoplastic resin layer 2, a black ink containing a urethane-based printing ink containing carbon black was pattern-printed to form the gloss matte-expressing design parts 3 (pattern layer 8a), and the primer layer 8 was formed on the colored thermoplastic resin layer 2 containing the gloss matte-expressing design parts 3, thereby obtaining a multi-layer body. The infrared transmittance at a wavelength of 2000 nm in the gloss matte-expressing design parts 3 was set to 8%.

At this time, by the formation by solid-printing a black ink using printing plates having various image density levels, a plurality of multi-layer bodies having the gloss matte-expressing design parts 3 having different image density levels was created. The image density levels were set to 0%, 20%, 40%, 60%, 70%, 80%, 90%. The image density level used herein refers to the percentage of an area where the ink is applied in a certain area.

The transparent thermoplastic resin layer 6 was formed by lamination onto the picture design layer 5 via an adhesive layer containing an adhesive resin (urethane adhesive). After the primer layer 8 was formed, this multi-layer body was heated by an infrared heater as an after-embossing step, and an embossing roll was pressed against the surface protective layer 7 to form the embossed parts 7a, thereby obtaining the decorative sheet illustrated in FIG. 1.

### (Example 2)

The infrared transmittance at a wavelength of 2000 nm of the gloss matte-expressing design parts 3 was set to 38%. The decorative sheet 1 illustrated in FIG. 1 was obtained in the same manner as in Example 1 above, except for the above.

### (Example 3)

The infrared transmittance at a wavelength of 2000 nm of the gloss matte-expressing design parts 3 was set to 58%. The decorative sheet 1 illustrated in FIG. 1 was obtained in the same manner as in Example 1 above, except for the above.

### (Example 4)

The infrared transmittance at a wavelength of 2000 nm of the gloss matte-expressing design parts 3 was set to 15%. The decorative sheet 1 illustrated in FIG. 1 was obtained in the same manner as in Example 1 above, except for the above.

### (Example 5)

On the other surface (surface on the side opposite to the picture design layer 5) of the colored thermoplastic resin layer 2, a transparent ink containing a urethane-based printing ink containing an infrared absorbing material was pattern-printed to form the gloss matte-expressing design parts 3. The decorative sheet 1 illustrated in FIG. 1 was obtained in the same manner as in Example 1 above, except for the above.

### (Example 6)

A multi-layer body was created which contained the colored thermoplastic resin layer 2 containing a 50 µm thick PBT layer, the picture design layer 51 containing the gloss matte-expressing design parts 31 in which a black ink containing a urethane-based printing ink was pattern-printed and the non-gloss matte-expressing design parts 51a using a urethane-based printing ink formed adjacent to the gloss matte-expressing design parts 31, the transparent thermoplastic resin layer 6 containing a 38 µm thick PP layer, and the surface protective layer 7 containing an acrylic resin composition as the main component. The infrared transmittance at a wavelength of 2000 nm of the gloss matte-expressing design parts 31 was set to 24%.

The transparent thermoplastic resin layer 6 was formed by lamination onto the picture design layer 51. After the surface protective layer 7 was formed, this multi-layer body was heated by an infrared heater. Thereafter, an embossing roll was pressed against the surface protective layer 7 to form the embossed parts 7a, and further the primer layer 8 was formed, thereby obtaining the decorative sheet illustrated in FIG. 4.

### (Example 7)

A multi-layer body was created which contained the colored thermoplastic resin layer 2 containing a 50 µm thick PBT layer, the picture design layer 52 containing the main picture design layer 52b formed using a urethane-based ink and the gloss matte-expressing design parts 32 formed by pattern-printing a transparent ink containing a urethane-based printing ink containing an infrared absorbing material, the transparent thermoplastic resin layer 6 containing a 38 µm thick PP layer, and the surface protective layer 7 containing an acrylic resin composition as the main component. The infrared transmittance at a wavelength of 2000 nm of the gloss matte-expressing design parts 32 was set to 25%.

The transparent thermoplastic resin layer 6 was formed by lamination onto the picture design layer 52. After the surface protective layer 7 was formed, this multi-layer body was heated by an infrared heater. Thereafter, an embossing roll was pressed against the surface protective layer 7 to form the embossed parts 7a, and further the primer layer 8 was formed, thereby obtaining the decorative sheet illustrated in FIG. 5.

### (Example 8)

On the colored thermoplastic resin layer 2, the picture design layer 52 containing the main picture design layer 52b formed using a urethane-based ink and the gloss matte-expressing design parts 32 in which transparent ink containing a urethane-based printing ink containing an infrared absorbing material was pattern-printed was formed. The infrared transmittance (2) at a wavelength of 2000 nm of the gloss matte-expressing design parts 32 in the picture design layer 52 was set to 16.48%. The decorative sheet illustrated in FIG. 7 was obtained in the same manner as in Example 1, except for the above. The infrared transmittance (1) at a wavelength of 2000 nm of the gloss matte-expressing design parts 3 in the other surface of the colored thermoplastic resin layer 2 was set to 8% as with Example 1.

### (Example 9)

On the colored thermoplastic resin layer 2, the same picture design layer 52 (containing the gloss matte-expressing design parts 32) as that of Example 8 was formed. Thus, the infrared transmittance (2) at a wavelength of 2000 nm of the gloss matte-expressing design parts 32 in the picture design layer 52 was set to 16.48%. The decorative sheet illustrated in FIG. 7 was obtained in the same manner as in Example 3, except for the above. The infrared transmittance (1) at a wavelength of 2000 nm of the gloss matte-expressing design parts 3 in the other surface of the colored thermoplastic resin layer 2 was set to 58% as with Example 3.

### (Example 10)

The gloss matte-expressing design parts 3 were not provided on the other surface of the colored thermoplastic resin layer 2, and the same picture design layer 52 (containing the gloss matte-expressing design parts 32) as that of Example 8 was formed on the colored thermoplastic resin layer 2. Thus, the infrared transmittance (2) at a wavelength of 2000 nm of the gloss matte-expressing design parts 32 in the picture design layer 52 was set to 16.48%. The decorative sheet illustrated in FIG. 5 was obtained in the same manner as in Example 1, except for the above.

### (Example 11)

The gloss matte-expressing design parts 3 were not provided on the other surface of the colored thermoplastic resin layer 2, and the same picture design layer 52 (containing the gloss matte-expressing design parts 32) as that of Example 8 was formed on the colored thermoplastic resin layer 2. Thus, the infrared transmittance (2) at a wavelength of 2000 nm of the gloss matte-expressing design parts 32 in the picture design layer 52 was set to 16.48%. The decorative sheet illustrated in FIG. 5 was obtained in the same manner as in Example 2, except for the above.

The heating temperatures by the infrared heater in the formation of the embossed parts 7a in Example 10 and Example 11 are different from each other (Heating temperature of Example 10 > Heating temperature of Example 11). Therefore, the depth of the embossed parts 7a of the decorative sheet according to Example 10 is larger than that of the embossed parts 7a of the decorative sheet according to Example 11.

### (Comparative Example 1)

As Comparative Example 1, the gloss matte-expressing design parts 3 were not provided on the other surface (surface on the side opposite to the picture design layer 5) of the colored thermoplastic resin layer 2, and the infrared transmittance at a wavelength of 2000 nm of the colored thermoplastic resin layer 2 was set to 61%. A decorative sheet was created in the same manner as in Example 1, except for the above. The image density levels were set to 0%, 20%, 40%, 60%, 70%, 80%, 90%.

### [Evaluation]

The decorative sheets having different image density levels of Examples 1 to 11 and Comparative Example 1 each were measured for the infrared transmittance. The infrared transmittance was measured by a method described below.

For the decorative sheet for each image density level of each of Examples 1 to 11 and the decorative sheet for each image density level of Comparative Example 1, the glossiness and the glossiness difference were acquired. As an acquisition method, a method described below was used. The acquired results are shown in Table 1. The numerical values shown in Table 1 are the average values of the results measured for each image density level.

The decorative sheet for each image density level of each of Examples 1 to 11 and the decorative sheet for each image density level of Comparative Example 1 were evaluated for the gloss matte design property.

### [Infrared transmittance measurement]

The decorative sheets of Examples 1 to 11 and Comparative Example 1 having different image density levels each were measured for the infrared transmittance of the gloss matte-expressing design parts. Specifically, the infrared transmittance at a wavelength of 2000 nm was measured using a UV-Vis spectrophotometer UV3600 manufactured by SHIMADZU Corporation.

In Table 1 below, for Examples 8 to 11, the infrared transmittance of the gloss matte-expressing design parts 3 is indicated as "Infrared transmittance (1)" and the infrared transmittance of the gloss matte-expressing design parts 32 is indicated as "Infrared transmittance (2)". For Examples 10, 11, the gloss matte-expressing design parts 3 are not provided, and therefore only "Infrared transmittance (2)" indicating the gloss matte-expressing design parts 32 are indicated, and the "Infrared transmittance (1)" is not indicated (-).

### [Glossiness measurement]

The decorative sheets of Examples 1 to 11 and the decorative sheet of Comparative Example 1 having different image density levels were subjected to embossing, and then the surface protective layer 7 immediately above the gloss matte-expressing design parts was subjected to specular glossiness measurement at an incident angle of 85° using a micro-TRI-gloss manufactured by BYK.

### [Glossiness difference]

The decorative sheets of Examples 1 to 11 and the decorative sheet of Comparative Example 1 having different image density levels were subjected to embossing, and then the surface protective layer immediately above portions where the gloss matte-expressing design parts were not formed was subjected to specular glossiness measurement by the same method as that in the glossiness measurement, and then differences from the glossiness of the surface protective layer immediately above the gloss matte-expressing design parts were individually calculated. It was confirmed whether gloss matte was expressed based on the glossiness difference.

### [Gloss matte design property]

The decorative sheets of Examples 1 to 11 and the decorative sheet of Comparative Example 1 having different image density levels were visually evaluated for the above-described glossiness difference and the gloss matte effect state.

The evaluation criteria were as follows. In this example, "∘" or more was evaluated as "Pass".
⊚: The glossiness difference is 3 or more and the gloss matte effect is stably expressed, and the gloss
matte-expressing design parts are almost invisible from the side of the surface protective layer.
∘: The glossiness difference is 3 or more and the gloss matte effect is stably expressed, but the gloss matte-expressing design parts are visible from the side of the surface protective layer.
×: Irrespective of the visibility of the gloss matte-expressing design parts from the side of the surface protective layer, the glossiness difference is smaller than 3 and the gloss matte effect is not sufficiently expressed.

**[Table 1]**

| | Ex. 1 | Ex. 2 | Ex. 3 | Ex. 4 | Ex. 5 | Ex. 6 | Ex. 7 | Comp. Ex. 1 |
|---|---|---|---|---|---|---|---|---|
| Infrared transmittance ^{*1} | 8% | 38% | 58% | 15% | 8% | 24% | 25% | 61% |
| Glossiness | 3.5 | 5.1 | 5.5 | 4.0 | 3.5 | 3.8 | 3.3 | 8.7 |
| Glossiness difference ^{*2} | 5.2 | 3.4 | 3 | 4.0 | 5.2 | 4.9 | 5.4 | 1 |
| GM design property | ⊚ | ○ | ⊚ | ⊚ | ⊚ | ○ | ⊚ | × |

| | Ex. 8 | Ex. 9 | Ex. 10 | Ex. 11 |
|---|---|---|---|---|
| Infrared transmittance ^{*1} (1) | 8% | 58% | - | - |
| Infrared transmittance ^{*1} (2) | 16.48% | 16.48% | 16.48% | 16.48% |
| Glossiness | 5.5 | 7.2 | 5.5 | 7.2 |
| Glossiness difference ^{*2} | 10.8 | 9.0 | 10.8 | 9.0 |
| GM design property | ⊚ | ○ | ⊚ | ○ |

| | | | | |
|---|---|---|---|---|
| *1 Transmittance at a wavelength of 2000 nm *2 Glossiness difference between a base material (no-ink part) and an ink part | | | | |

### [Results]

Although the decorative sheets of Examples 1 to 11 have a slight difference in glossiness, the glossiness difference between the portions where the gloss matte-expressing design parts were provided and the portions where the gloss matte-expressing design parts were not provided is 3 or more, which satisfies the glossiness difference of 3 that generally makes the gloss matte expression confirmable, and therefore it was confirmed that sufficient gloss matte expression can be obtained.

More specifically, it was able to be confirmed that, by providing the gloss matte-expressing design parts having infrared transmittance at a wavelength of 2000 nm of 60% or less on either or both of the rear surface of the colored thermoplastic resin layer and the picture design layer, the decorative sheet capable of achieving sufficient gloss matte expression, having texture close to the surface texture of wood, stone, and the like used for building materials, and having an excellent design property can be obtained.

### Reference Signs List

1, 11, 12, 13, 14: decorative sheet
2: colored thermoplastic resin layer
3, 31, 32: gloss matte-expressing design part
5, 51, 52: picture design layer
6: transparent thermoplastic resin layer
7: surface protective layer
7a: embossed part
8: primer layer
8a, 52c: pattern layer
10: decorative member

## Claims

1. A decorative sheet having a picture design layer,
the decorative sheet comprising:
the picture design layer, a transparent resin layer, and a surface protective layer sequentially deposited on one surface of a colored resin layer; wherein
on another surface of the colored resin layer, a region containing a predetermined material having light absorption properties to infrared rays as compared with the colored resin layer is arranged in synchronization with a picture design of the picture design layer,
the region containing the predetermined material has infrared transmittance at a wavelength of 2000 nm of 60% or less, and
an embossed part is formed at a position where the embossed part overlaps with the region containing the predetermined material in plan view of the surface protective layer.

2. The decorative sheet according to claim 1, wherein the predetermined material is at least one inorganic material among carbon black, tin-doped indium oxide, antimony-doped tin oxide, lanthanum hexaboride, and cesium-doped tungsten oxide.

3. A decorative sheet having a picture design layer,
the decorative sheet comprising:
the picture design layer, a transparent resin layer, and a surface protective layer sequentially deposited on one surface of a colored resin layer; wherein
the picture design layer has a region containing a predetermined material having light absorption properties to infrared rays as compared with the transparent resin layer,
the region containing the predetermined material has infrared transmittance at a wavelength of 2000 nm of 60% or less, and
an embossed part is formed at a position where the embossed part overlaps with the region containing the predetermined material in plan view of the surface protective layer.

4. The decorative sheet according to claim 3, wherein part of a picture design of the picture design layer is formed by the region containing the predetermined material.

5. The decorative sheet according to claim 3, wherein
the picture design layer has a main picture design layer forming a picture design and the region containing the predetermined material, and
the region containing the predetermined material is arranged on the main picture design layer in synchronization with the picture design.

6. The decorative sheet according to claim 4, wherein
on another surface of the colored resin layer, a region which contains a predetermined material having light absorption properties to infrared rays as compared with the colored resin layer and which has an infrared transmittance at a wavelength of 2000 nm of 60% or less is arranged in synchronization with the part of the picture design of the picture design layer, and
the embossed part is formed at a position where the embossed part overlaps with the region containing the predetermined material in the picture design layer and the region containing the predetermined material in the another surface of the colored resin layer in plan view of the surface protective layer.

7. The decorative sheet according to claim 1, wherein
the picture design layer has a main picture design layer forming a picture design and a region containing a predetermined material having light absorption properties to infrared rays as compared with the transparent resin layer,
the region containing the predetermined material in the picture design layer is arranged on the main picture design layer in synchronization with the picture design and has infrared transmittance at a wavelength of 2000 nm of 60% or less, and
the embossed part is formed at a position where the embossed part overlaps with the region containing the predetermined material in the another surface of the colored resin layer and the region containing the predetermined material in the picture design layer in plan view of the surface protective layer.

8. A decorative member comprising:
a substrate; and
the decorative sheet according to any of claims 1 to 7 provided on at least one surface side of the substrate, wherein
the substrate is any of a wood substrate, a resin substrate, a noncombustible substrate, or a metal substrate.
